# EUROPÄISCHE PATENTSCHRIFT

(11) **EP 2 812 202 B1**
(45) Veröffentlichungstag und Bekanntmachung des Hinweises auf die Patenterteilung: **26.10.2016**
(21) Anmeldenummer: 13702912.0
(22) Anmeldetag: 31.01.2013
(51) Int. Cl.: B60K 35/00, B60K 37/06, B60W 50/16, B60W 50/14, B60W 30/00, G05D 1/02, G05G 1/00

(54) **VORRICHTUNG ZUM AUTOMATISIERTEN FÜHREN EINES KRAFTWAGENS, KRAFTWAGEN MIT EINER SOLCHEN VORRICHTUNG UND VERFAHREN ZUM BETREIBEN EINES KRAFTWAGENS**
DEVICE FOR AUTOMATICALLY GUIDING AN AUTOMOBILE VEHICLE, AUTOMOBILE VEHICLE WITH SUCH A DEVICE AND METHOD FOR OPERATING AN AUTOMOBILE VEHICLE
DISPOSITIF POUR LE GUIDAGE AUTOMATIQUE D'UN VÉHICULE AUTOMOBILE, VÉHICULE AUTOMOBILE AVEC UN TEL DISPOSITIF ET PROCÉDÉ POUR OPÉRER UN VÉHICULE AUTOMOBILE

(30) Priorität: 06.02.2012 DE 102012002304
(43) Veröffentlichungstag der Anmeldung: 17.12.2014
(73) Patentinhaber: Audi AG, 85045 Ingolstadt (DE)
(72) Erfinder: WIMMER, Martin, 93049 Regensburg (DE); MEURLE, Jürgen, 85055 Ingolstadt (DE); SACHER, Heike, 80797 München (DE); SIEDERSBERGER, Karl-Heinz, 86669 Königsmoos (DE); SCHEIFFERT, Fabian, 71384 Weinstadt (DE); EHRHART, Franziska, 85055 Ingolstadt (DE)
(74) Vertreter: Brandt, Kai
(86) Internationale Anmeldenummer: PCT/EP2013/000285
(87) Internationale Veröffentlichungsnummer: WO 2013/117307

(56) Entgegenhaltungen:
- EP-A1- 2 050 610
- EP-A1- 2 340 976
- EP-A2- 0 796 756
- DE-A1- 10 303 792
- DE-A1- 10 341 846
- DE-A1-102007 029 033
- DE-A1-102007 029 034
- DE-A1-102008 055 876

## Beschreibung

Die Erfindung betrifft eine Vorrichtung zum automatisierten Führen eines Kraftwagens, welche dazu ausgelegt ist, während einer Fahrt des Kraftwagens diesen selbstständig zu führen. Der Begriff "Führen des Kraftwagens" umfasst hierbei zum einen das Lenken des Kraftwagens (Folgen eines Straßenverlaufs, Ausrichten des Kraftwagens innerhalb einer Fahrspur, Spurwechselmanöver), was auch als Querführung bezeichnet wird, und zum anderen das Steuern der Fahrgeschwindigkeit des Kraftwagens (Beschleunigen, Verringern der Fahrgeschwindigkeit, Notbremsen, Beibehalten der Fahrgeschwindigkeit), was auch als Längsführung bezeichnet wird. Zu der Erfindung gehört auch ein Verfahren zum Betreiben eines Kraftwagens, durch welches das Automatisieren der Führung des Kraftwagens ermöglicht wird. Eine gattungsgemäße Vorrichtung und ein gattungsgemäßen Verfahren ist aus der EP-A-2340976 bekannt.

Eine ähnliche Vorrichtung ist aus der DE 10 2010 022 433 A1 bekannt. Danach kann eine Fahrerassistenzeinrichtung in einem vollautomatischen Assistenzmodus die Führung des Fahrzeugs vollständig selbständig ausführen. Der Fahrer des Kraftwagens muss dann während der Fahrt weder das Lenkrad noch die Pedalen des Kraftwagens bedienen und kann daher für eine verhältnismäßig lange Zeitdauer seine Aufmerksamkeit anderen Dingen widmen, wie beispielsweise der Bedienung eines Infotainmentsystems.

Vollautomatische Fahrerassistenzsysteme sind beispielsweise im Zusammenhang mit einem Führen des Kraftwagens in einem Stau nützlich, wenn der Kraftwagen im Stop-and-Go-Verkehr nur sehr langsam, in der Regel mit Schrittgeschwindigkeit, gefahren werden kann und dies auch nur in größeren zeitlichen Abständen möglich ist. Genauso ist es aber auch bei entsprechender Überwachung der Umgebung des Kraftwagens denkbar, eine vollautomatische Führung eines Kraftwagens bei anderen Fahrmanövern, etwa beim Einparken, oder aber auch höheren Geschwindigkeiten zu ermöglichen.

Auch bei einer automatisierten Führung des Kraftwagens durch die genannte Vorrichtung muss es einem Fahrer ermöglicht sein, Einfluss auf die Führung nehmen zu können, um beispielsweise mit dem Kraftwagen an einer Ausfahrt abbiegen zu können, wenn der Fahrer sich spontan entschlossen hat, eine andere Fahrtroute zu nehmen, oder mit dem Kraftwagen versetzt zu einer Mittellinie einer Fahrspur zu fahren (so genannte Querablage), um an einem vorausfahrenden Fahrzeug vorbeischauen zu können. Die grundlegend unterschiedliche Funktionsweise vollautomatisierter Systeme im Vergleich zu Systemen der Teilautomation (die z.B. ausschließlich eine Fahrgeschwindigkeitsregelung durchführen) oder zur manuellen Führung verlangt nach einer distinguierten Form der Mensch-Maschine-Kommunikation. Die Aufgaben des Menschen im vollautomatisierten Regelkreis von Fahrer, Fahrzeug und Umwelt verlagern sich weg von einem Fokus auf die primäre Fahraufgabe hin zu Systemüberwachungsaufgaben. Hierzu muss ihm ein Überblick darüber geboten werden, welche Fahrmanöver momentan durch das vollautomatische Fahrerassistenzsystem durchgeführt werden können und welche Einflussmöglichkeiten der Fahrer auf das momentan ausgeführte Fahrmanöver noch hat.

Eine Aufgabe der vorliegenden Erfindung besteht darin, eine übersichtliche Bedienung eines Fahrerassistenzsystems zu ermöglichen, welches einen Kraftwagen vollautomatisiert führt.

Die Aufgabe wird durch eine Vorrichtung gemäß Patentanspruch 1, einen Kraftwagen gemäß Patentanspruch 12 und ein Verfahren gemäß Patentanspruch 13 gelöst. Vorteilhafte Weiterbildungen der erfindungsgemäßen Vorrichtung sind durch die Unteransprüche gegeben.

Bei der erfindungsgemäßen Vorrichtung handelt es sich um ein Fahrerassistenzsystem, welches dazu ausgelegt ist, während einer Fahrt des Kraftwagens eine Quer- und Längsführung des Kraftwagens selbstständig auszuführen, d.h. also ohne Zutun eines Fahrers. Die Vorrichtung weist hierzu eine Steuereinrichtung, etwa ein Steuergerät mit einem Mikrocontroller, auf, mittels welchem Steuersignale erzeugt und hierdurch Aktoren des Kraftwagens angesteuert werden können, die zum Führen des Kraftwagens ausgelegt sind. Bei solchen Aktoren kann es sich um eine elektrisch steuerbare Servolenkung, ein elektrisch steuerbares Bremssystem und ähnliche aus dem Bereich der Drive-By-Wire-Systeme bekannte Komponenten handeln. Die Steuereinrichtung bildet bei der erfindungsgemäßen Vorrichtung einen Slave in einer Master-Slave-Anordnung. Der zugehörige Master ist dabei durch eine Benutzerschnittstelle der Vorrichtung gebildet. Dies bedeutet, dass die Benutzerschnittstelle den Slave ansteuert und hierdurch das Führverhalten des Slaves beeinflussen kann. Die Benutzerschnittstelle empfängt dazu eine Eingabe von einem Benutzer. Bei dieser Eingabe kann es sich um eine Auswahl eines von dem Slave auszuführenden Fahrmanövers und/oder einen Wert für einen Fahrparameter zu einem momentan von dem Slave ausgeführten Fahrmanöver handeln. So kann beispielsweise vorgesehen sein, dass der Benutzer über die Benutzerschnittstelle als Fahrmanöver ein Überholen eines vorausfahrenden Fahrzeugs, ein Abbiegen, ein Einparken des Kraftwagens auf einen Parkplatz oder ein Wechseln einer Fahrspur auswählt. Als ein mittels der Benutzerschnittstelle einstellbarer Fahrparameter kann beispielsweise ein Abstand zu einem vorausfahrenden Fahrzeug, eine Querablage des Kraftwagens innerhalb einer momentan befahrenen Spur oder eine Setzgeschwindigkeit (Sollgeschwindigkeit) einer Fahrgeschwindigkeitsregelung vorgesehen sein. Hat der Benutzer seine Eingabe beendet, steuert die Benutzerschnittstelle als Master die Steuereinrichtung als den Slave in Abhängigkeit von dieser Eingabe dann an. Optional kann vorgesehen sein, dass der Benutzer die Eingabe an der Benutzerschnittstelle zusätzlich bestätigen muss, bevor die Benutzerschnittstelle den Slave ansteuert. Im Unterschied zum Drive-By-Wire-Konzept führt der Fahrer durch Bedienen der Benutzerschnittstelle also den Kraftwagen nicht selbst. Er tätigt lediglich eine Eingabe, durch die er seinen Fahrwunsch äußert, sodass die eigentliche Abfolge und Koordination von Quer- und Längsführungsschritten zum Umsetzen des Fahrwunsches vollständig durch den Slave ausgeführt wird.

Damit der Benutzer nun in übersichtlicher Weise verfügbare Fahrmanöver auswählen kann bzw. einen sinnvollen Wert für den Fahrparameter einstellen kann, ist die Benutzerschnittstelle in einer besonderen Weise ausgestaltet. Sie umfasst zum einen eine Repräsentation des Kraftwagens und zum anderen ein Feld, in welchem diese Repräsentation angeordnet ist. So kann die Benutzerschnittstelle hierzu etwa eine graphische Anzeigeeinrichtung (z.B. einen Bildschirm) aufweisen, auf welcher der Kraftwagen durch ein Bild oder ein Symbol repräsentiert ist. Diese Repräsentation befindet sich in einem Feld. Durch einen Rand des Feldes wird dem Benutzer dabei verdeutlicht, welche Veränderungen eines Fahrparameterwerts höchstens zulässig sind. Fährt das Fahrzeug beispielsweise auf einer Fahrspur einer mehrspurigen Straße und befindet sich vor dem Kraftwagen ein weiteres Fahrzeug, so kann ein rechter und ein linker Rand des Feldes jeweils einen Fahrspurrand und ein vor der Repräsentation des Kraftwagens angezeigter oberer Rand des Feldes das vorausfahrende Fahrzeug symbolisieren. Richtet nun der Benutzer die Repräsentation des Kraftwagens innerhalb des Feldes mittels eines entsprechenden Bedienelements neu aus, so hat dies zur Folge, dass die Steuereinrichtung eine entsprechende Positionsänderung des Kraftwagens innerhalb der Fahrspur ausführt. Um nicht bei jedem kurzen Antippen des Bedienelements eine entsprechende Reaktion des Slaves (d.h. der Steuereinrichtung) auszulösen, kann dabei vorgesehen sein, dass das Nachführen der durch den Slave eingeregelten Position des Kraftwagens erst beginnt, nachdem die Position der Repräsentation des Kraftwagens nach einer Latenzzeit immer noch durch den Benutzer gehalten wird. Dies entspräche dann der bereits erwähnten Bestätigung der Eingabe durch den Benutzer.

Bei der Benutzerschnittstelle muss es sich aber nicht unbedingt um eine graphische Anzeigeeinrichtung handeln. Der Kraftwagen kann auch abstrakter z.B. durch eine Handhabe, wie etwa einen Steuerhebel, repräsentiert sein. Um nun dem Benutzer beim Bedienen des Steuerhebels einen Eindruck davon zu vermitteln, welche Fahrparameterwerte er einstellen kann, ist die Benutzerschnittstelle dann dazu ausgelegt, durch Ansteuern eines Aktors, beispielsweise eines Elektromotors, eine Kraft-Weg-Kennlinie für eine Auslenkung der Handhabe zu erzeugen und hierdurch sozusagen den Rand des Feldes der möglichen Fahrparameterwerte dem Benutzer haptisch zu vermitteln, wenn dieser die Handhabe auslenkt. Eine solche Benutzerschnittstelle hat den Vorteil, dass der Fahrer bei ihrer Bedienung nicht den Blick von dem umgebenden Straßenverkehr abwenden muss.

Neben der bereits beschriebenen Möglichkeit des Einstellens des Fahrparameters durch Verschieben der Repräsentation des Kraftwagens innerhalb des Feldes kann dieselbe Benutzerschnittstelle auch dazu genutzt werden, dem Benutzer das Auswählen eines auszuführenden Fahrmanövers zu ermöglichen. Dies ist zweckmäßigerweise dadurch ermöglicht, dass ein Benutzer die Repräsentation des Kraftwagens über den Rand des Feldes hinaus verschiebt. Möchte ein Fahrer beispielsweise auf eine links neben dem Kraftwagen befindliche Fahrspur wechseln, so kann er also auf einer graphischen Anzeige das Kraftwagensymbol z.B. zunächst an den linken Rand des Feldes und dann über diesen hinaus verschieben.

Um dem Benutzer einen unmittelbaren Eindruck von den Folgen seiner Eingabe vermitteln zu können, kann auch vorgesehen sein, das Nachführen der durch den Slave eingeregelten Position des Kraftwagens in Echtzeit durchzuführen.

Da der Rand des Feldes der Benutzerschnittstelle die höchstens zulässige Veränderung eines Fahrparameterwerts repräsentiert, muss ein Verlauf des Randes stets an die tatsächlichen Gegebenheiten angepasst werden, also beispielsweise an die Spurbreite oder daran, ob tatsächlich ein Fahrzeug dem Kraftwagen vorausfährt oder nicht. Zweckmäßigerweise ist hierzu die Benutzerschnittstelle dazu ausgelegt, den Rand des Feldes in Abhängigkeit von einer Lage von in der Umgebung des Kraftwagens durch eine Erkennungseinrichtung erkannten Objekten festzulegen, also in Abhängigkeit von einer erkannten Spurmarkierung und/oder eines erkannten, vorausfahrenden Fahrzeugs. Zusätzlich oder alternativ dazu kann vorgesehen sein, den Verlauf des Randes in Abhängigkeit von einer Information zu einer Verkehrsregelung festzulegen, also etwa einer vorgeschriebenen Höchstgeschwindigkeit entlang der momentanen Fahrroute des Kraftwagens.

Wie bereits erwähnt, wird durch die erfindungsgemäße Vorrichtung kein Drive-By-Wire-System realisiert, da ein solches stets eine direkte Kopplung zwischen der Eingabe des Benutzers und den Aktoren zum Führen des Kraftwagens vorsieht. Entsprechend ergibt sich bei der erfindungsgemäßen Vorrichtung eine größere Flexibilität bei der Ausführung des von dem Fahrer geäußerten Fahrerwunsches. So sieht eine Ausführungsform der erfindungsgemäßen Vorrichtung vor, dass der Slave in Abhängigkeit von Informationen zu in einer Umgebung des Kraftwagens erkannten Objekten unabhängig vom Master entscheidet, ob und wann er den Kraftwagen gemäß den vom Master empfangenen Steuerdaten führt. Wählt also der Fahrer ein bestimmtes Fahrmanöver aus, das von dem Slave ausgeführt werden soll, so kann der Slave nach Empfang der entsprechenden Steuerdaten zunächst eine günstige Gelegenheit für das Ausführen dieses Fahrmanövers abwarten und erst dann die nötigen Schritte einleiten. Der Fahrer muss in der Zwischenzeit nicht selbst seine Aufmerksamkeit ständig darauf richten, wann sich die Gelegenheit ergibt. Dies führt zu einer erheblichen Entlastung des Fahrer. Durch die Entkopplung der Eingabe des Fahrerwunsches von der tatsächlichen, selbstständigen Umsetzung durch den Slave kann zudem auch die Sicherheit der Kraftwageninsassen erhöht werden, indem der Fahrerwunsch nur in entsprechend sicheren Situationen umgesetzt wird.

Die erfindungsgemäße Vorrichtung ist in Zusammenhang mit dem Empfang einer Benutzereingabe sehr flexibel ausgestaltbar. So kann die Benutzereingabe über eine berührungsempfindliche Fläche, beispielsweise eines Touch-Screens (berührungsempfindlicher Bildschirm), oder über einen Steuerhebel empfangen werden. Auch eine Verwendung einer Gestensteuerung und/oder einer Sprachsteuerung ist problemlos möglich.

Insgesamt wird durch die erfindungsgemäße Vorrichtung also zusammenfassend ermöglicht, das folgende erfindungsgemäße Verfahren durchzuführen. An der Benutzerschnittstelle wird eine Repräsentation des Kraftwagens sowie die auswählbaren, von der Steuereinrichtung ausführbaren Fahrmanöver und/oder die möglichen Fahrparameterwerte zu einem momentan ausgeführten Fahrmanöver dargestellt. Zu den Fahrmanövern bzw. den Fahrparametern wird dann durch die Benutzerschnittstelle von einem Benutzer eine Eingabe empfangen. Durch diese Eingabe steuert der Benutzer den Kraftwagen aber nicht im Sinne eines Drive-By-Wire-Systems. Stattdessen gibt der Benutzer durch diese Eingabe an, welches Fahrmanöver ohne sein Zutun in naher Zukunft auszuführen ist bzw. welcher Wert eines Fahrparameters, also beispielsweise welcher Abstand zu den Seitenstreifen einer Fahrspur oder zu einem vorausfahrenden Fahrzeug, ohne sein weiteres Zutun einzuregeln ist. Durch die Benutzerschnittstelle werden dann entsprechende Steuerdaten erzeugt und an die Steuereinheit übertragen, welche den Kraftwagen selbstständig führt. Die Steuereinheit verändert dann die Führung des Kraftwagens gemäß den Steuerdaten, falls ein vorbestimmtes Kriterium betreffend eine Umgebung des Kraftwagens erfüllt ist, also etwa eine Überholspur frei ist, um einen vorausfahrenden Wagen überholen zu können, oder eine vorgegebene Querablage des Kraftwagens auf der Fahrspur zu keiner Gefährdung der Sicherheit des Fahrers führt.

In Zusammenhang mit dem erfindungsgemäßen Verfahren umfasst die Erfindung auch Weiterbildungen dieses Verfahrens, welche Merkmale aufweisen, die den bereits in Zusammenhang mit der erfindungsgemäßen Vorrichtung beschriebenen Merkmalen entsprechen. Daher werden diese Weiterbildungen des erfindungsgemäßen Verfahrens hier nicht noch einmal beschrieben.

Zu der Erfindung gehört des Weiteren auch ein Kraftwagen, in welchen eine Ausführungsform der erfindungsgemäßen Vorrichtung eingebaut ist.

Im Folgenden wird die Erfindung anhand eines Ausführungsbeispiels noch einmal konkreter erläutert. Dazu zeigt:
- Fig. 1: eine schematische Darstellung einer Ausführungsform des erfindungsgemäßen Kraftwagens;
- Fig. 2: einen schematischen Aufbau einer Benutzerschnittstelle eines Fahrerassistenzsystems des Kraftwagens von Fig. 1; und
- Fig. 3: ein Diagramm mit einem schematisierten Verlauf einer Kraft-Weg-Kennlinie, die an einer Handhabe des Fahrerassistenzsystems des Kraftwagens von Fig. 1 eingestellt sein kann.

Die Beispiele stellen bevorzugte Ausführungsformen der Erfindung dar.

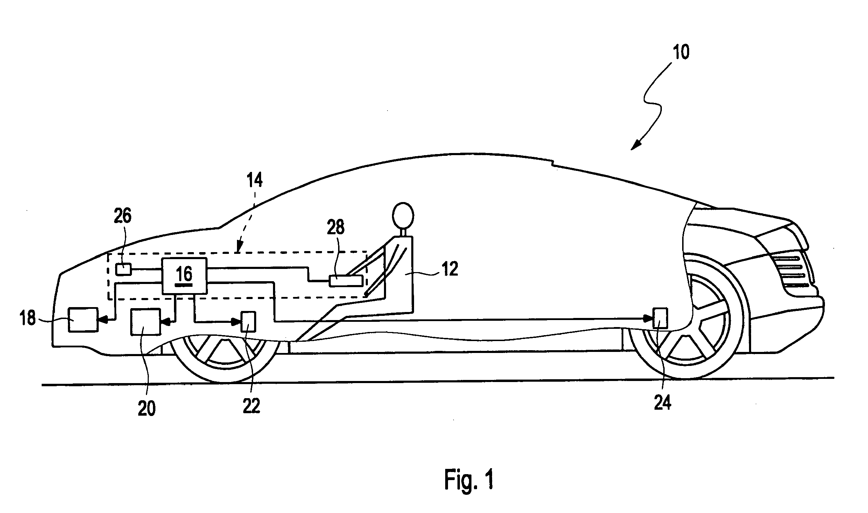

In Fig. 1 ist ein Kraftwagen 10 gezeigt, in welchem sich ein Fahrer 12 befindet. Bei dem Kraftwagen 10 kann es sich beispielsweise um einen Personenkraftwagen handeln. Für die folgende Erläuterung sei angenommen, dass sich der Kraftwagen 10 in einer Fahrsituation befindet, in welcher das Führen des Kraftwagens 10 viele unterschiedliche Führungsschritte erfordert. So kann sich der Kraftwagen 10 beispielsweise in in einem Stau befinden, in dem es nur im Stop-and-Go-Verkehr vorangeht. Entsprechend muss der Kraftwagen 10 in wechselnder Folge beschleunigt und dann wieder abgebremst werden. Zugleich sei angenommen, dass diese Fahrsituation sehr monoton ist. Der Fahrer 12 ist in dieser Fahrsituation deutlich entlastet. Er muss sich weder die ganze Zeit vollständig auf den Verkehr konzentrieren, noch muss er die Pedalerie und das Lenkrad des Kraftwagens 10 die ganze Zeit bedienen. Der Kraftwagen 10 wird nämlich vollständig durch ein Fahrerassistenzsystem 14 geführt (vollständige Längs- und Querführung). Das Fahrerassistenzsystem 14 weist dazu ein Steuergerät 16 auf, das ein Motorsteuergerät 18, eine elektromechanische Lenkung 20 und Bremsen 22, 24 des Kraftwagens 10 steuert. Neben dem Steuergerät 16 gehört zu dem Fahrerassistenzsystem 14 auch eine Überwachungseinrichtung 26, die beispielsweise einen Radar und eine Kamera umfassen kann, mittels welchen die Umgebung des Kraftwagens 10 beobachtet wird. Das Steuergerät 16 führt den Kraftwagen 10 gemäß einer Vorgabe, die durch Werte von Fahrparametern gebildet ist. Beispielsweise hält das Steuergerät 16 einen vorgegebenen Sollabstand zu einem vorausfahrenden Fahrzeug und zu Fahrspurstreifen, die sich beiderseits des Kraftwagens 10 am Fahrspurrand befinden. Das Steuergerät 16 regelt die Sollwerte dabei in Abhängigkeit von Daten der Überwachungseinrichtung 26 ein. Das Steuergerät 16 hält somit selbstständig den Kraftwagen 10 auf der momentan befahrenen Fahrspur und zwar entweder in dem vorgegebenen Soll-Abstand zum vorausfahrenden Fahrzeug oder aber bei einer vorgegebenen Sollgeschwindigkeit, falls kein vorausfahrendes Fahrzeug durch die Überwachungseinrichtung 26 erkannt wird.

Die Sollwerte kann der Fahrer 12 über eine Benutzerschnittstelle 28 des Fahrerassistenzsystems 14 einstellen. Die Benutzerschnittstelle 28 kann beispielsweise einen Bildschirm oder auch einen Touch-Screen oder einen Steuerhebel oder auch eine translatorisch in einer Ebene senkrecht zur Fahrzeughochachse auslenkbare Handhabe umfassen. Über die Benutzerschnittstelle 28 ist es dem Fahrer 12 auch möglich, das Steuergerät 16 zum Ausführen eines anderen Fahrmanövers zu veranlassen.

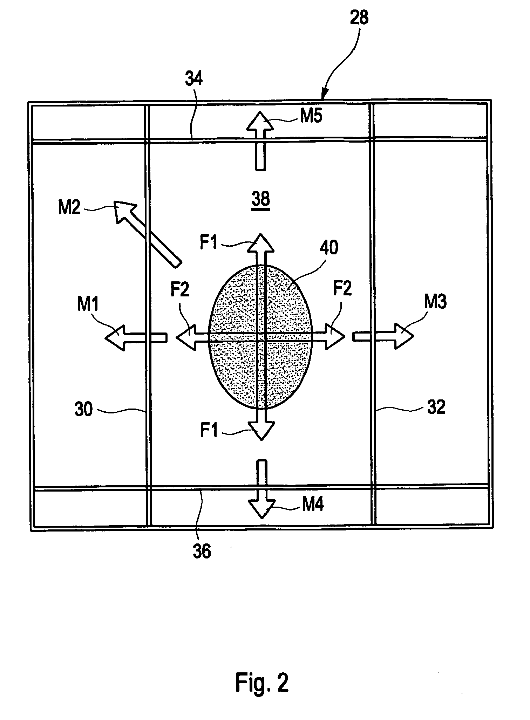

Die Benutzerschnittstelle 28 und das Steuergerät 16 bilden eine Master-Slave-Anordnung, wobei die Benutzerschnittstelle 28 den Master und das Steuergerät 16 den Slave darstellt. Die Benutzerschnittstelle 28, d.h. der Master, präsentiert eine Miniatur der Regelstrecke, also die durch den Slave (das Steuergerät 16) einzuregelnden Sollwerte der Position bzw. Fahrgeschwindigkeit des Kraftwagens 10. Das Bedienkonzept erlaubt es dem Nutzer, also dem Fahrer 12, über die modellhafte, abstrahierte Abbildung der Regelstrecke in Form der Benutzerschnittstelle 28 Fahrparameter zu dem momentan ausgeführten Fahrmanöver anzupassen und auch ein neues Fahrmanöver zu triggern, d.h. dessen Ausführung auszulösen, ohne dabei selber das Manöver ausführen zu müssen. Durch die Realisierung als Master-Slave-Anordnung wird die symbolhafte Projektion des Kraftwagens auf die Benutzerschnittstelle realisiert sowie Restriktionen, die sich beim Einstellen von Fahrparameterwerten oder Auswählen von Fahrmanövern aufgrund der aktuellen Umgebungsbedingungen des Kraftwagens 10 ergeben. Auch diese Restriktionen werden abstrahiert über die Benutzerschnittstelle 28 dem Fahrer 12 dargestellt. Wie in Fig. 2 veranschaulicht, werden in einem ersten Schritt der abstrahierten Darstellung die Spurmarkierungen 30, 32 der eigenen Fahrspur des Kraftwagens 10 sowie gegebenenfalls regelungsrelevante Vorderfahrzeuge 34 bzw. ein nachfolgendes Fahrzeug 36 repräsentiert. Auch die Darstellung weiterer Restriktionen durch Umgebungsbedingungen, zum Beispiel eine Geschwindigkeitsbegrenzung, ist denkbar. Der Abstrahierungsgrad dieser Darstellung kann dabei variieren. Die Kommunikation dieser Informationen an den Fahrer 12 kann über verschiedene Sinneskanäle des Menschen einzeln oder kombiniert erfolgen, also akustisch, haptisch, visuell und taktil, um nur die wichtigsten Beispiele zu nennen.

Durch die auf der Benutzerschnittstelle 28 repräsentierten Grenzen ist ein Feld 38 gebildet. In dem Feld 38 befindet sich eine Repräsentation 40 des Kraftwagens 10 an einer Stelle, die der aktuellen Position des Kraftwagens 10 auf der eigenen Fahrspur bezüglich des vorausfahrenden Fahrzeugs (Repräsentation 34), des Fahrspurstreifens (Repräsentationen 30, 32) und des nachfolgenden Fahrzeugs (Repräsentation 36) entspricht.

Der Fahrer 12 kann die Werte der Fahrparameter des Steuergeräts 16 betreffend die Position des Kraftwagens 10 auf der eigenen Fahrspur anpassen, indem er die Repräsentation 40 innerhalb des Feldes 38 auslenkt. So lässt sich ein Fahrparameter F1 (Abstand zum vorausfahrenden Fahrzeug bzw. Vergrößern der Sollfahrgeschwindigkeit) durch Verschieben der Repräsentation 40 zu der der Repräsentation 40 vorgelagerten Grenze 34 erreichen. Die Abstände zu den Fahrspurrändern werden als ein Fahrparameter F2 durch seitliches Verschieben der Repräsentation 40 innerhalb des Feldes 38 eingestellt. Aus den Fahrparametern F1 und F2 ergibt sich eine Vorgabe für die Querablage des Kraftwagens 10 innerhalb der eigenen Fahrspur sowie eine Anpassung der Sollzeitlücke (Sollabstand) zum Vorderfahrzeug. Die Benutzerschnittstelle 28, d.h. der Master des Bedienkonzepts, überträgt die von dem Fahrer 12 durch Positionieren der Repräsentation 40 vorgegebenen Wunschwerte als Steuerdaten an das Steuergerät 16. Die Reaktion des Steuergeräts 16, also des Slaves, folgt dann der Positionsänderung des Masters. Das Nachführen der Slave-Position kann entweder über Halten der Master-Position und Beginn der Reaktion nach einer Latenzzeit realisiert werden oder die Slave-Position wird in Echtzeit der Master-Position angepasst.

Über die Benutzerschnittstelle 28 kann es dem Fahrer 12 auch ermöglicht werden, ein neues Fahrmanöver einzuleiten, also z.B. einen Wechsel der Fahrspur oder ein Manövrieren des Kraftwagens in eine Parklücke. Hierzu sind in der Benutzerschnittstelle 28 entsprechende Fahrmanöver vordefiniert. Für die Erläuterung möglicher Fahrmanöver sei im Folgenden in Zusammenhang mit Fig. 2 angenommen, dass sich der Kraftwagen 10 auf der rechten äußeren Fahrspur einer mehrspurigen Fahrbahn befindet. Ein erstes mögliches, durch die Benutzerschnittstelle 28 dem Fahrer 12 zur Auswahl gestelltes Fahrmanöver M1 ist ein Spurwechsel auf die benachbarte linke Spur. Ein weiteres Fahrmanöver M2 bildet ein Überholmanöver des vorausfahrenden Fahrzeugs. Um von der Fahrbahn abzubiegen und beispielsweise von einer Autobahn in eine Ausfahrt einzufahren, muss ein Abbiegemanöver als weiteres Fahrmanöver M3 von dem Fahrer 12 angestoßen werden. Das Anhalten des Kraftwagens 10 bildet ein viertes Fahrmanöver M4. Um bei freier Fahrbahn den Kraftwagen 10 möglichst schnell zu beschleunigen (so genannte Kick-Down-Funktion), muss ein entsprechendes Beschleunigungsmanöver (Fahrmanöver M5) von dem Fahrer 12 getriggert werden. In einem anderen Zusammenhang kann das Anstoßen des Fahrmanövers M5 auch eine so genannte Anfahrbestätigung darstellen, d.h. der Fahrer 12 muss nach einem selbstständigen Anhalten des Kraftwagens 10 durch das Steuergerät 16 erst bestätigen, dass das Steuergerät 16 den Kraftwagen 10 wieder in Bewegung setzen darf.

Ein Fahrmanöver impliziert das Verlassen der den Slave (das Steuergerät 16) einschränkenden Barrieren 30, 32, 34, 36. Der relevante Fahrstreifen soll verlassen werden und in der Konsequenz das regelungsrelevante Vorderfahrzeug (falls vorhanden) gewechselt werden. Um diese Konsequenzen dem Fahrer 12 zu vermitteln, wird das Anstoßen oder Antriggern eines Fahrmanövers über die Benutzerschnittstelle 28 in der entsprechenden Weise realisiert: Der Fahrer 12 muss die virtuellen Grenzen 30, 32, 34, 36 überstimmen, d.h. die Repräsentation 40 über die Grenzen hinaus verschieben. In Fig. 2 sind hierzu durch Richtungspfeile für die entsprechenden Fahrmanöver M1 bis M5 die Richtungen angezeigt, in welche die Repräsentation 40 hierbei zu verschieben ist. Das Steuergerät 16 setzt das Fahrmanöver dabei nicht unmittelbar um. Vielmehr überprüft das Steuergerät 16 anhand der Daten der Überwachungseinrichtung 26, ob aufgrund passender Umgebungsbedingungen das Fahrmanöver überhaupt sicher ausführbar ist. Ist dies nicht innerhalb einer vorbestimmten Zeit möglich, kann das ausgewählte Fahrmanöver verfallen, d.h. der Versuch der Ausführung dieses Fahrmanövers wird abgebrochen. Ergibt sich eine Gelegenheit, das vom Fahrer 12 gewünschte Fahrmanöver auszuführen, so leitet das Steuergerät 16 entsprechende Führungsschritte ein, indem es das Steuergerät 18, die Lenkung 20 bzw. die Bremsen 22, 24 mit entsprechenden Steuersignalen ansteuert. Während des Ausführens des Fahrmanövers und nach dessen Beendigung werden dann die virtuellen Grenzen 30, 32, 34, 36, wie sie dem Fahrer 12 über die Benutzerschnittstelle 28 präsentiert werden, an die sich ergebende neue Fahrsituation angepasst.

Der Zustand der Regelstrecke Kraftwagen, d.h. die erkannten Umgebungsbedingungen, und die Position des Kraftwagens 10 innerhalb der Umgebung, kann dem Fahrer 12 durch unterschiedliche Modalitäten kommuniziert werden.

So kann die in Fig. 2 dargestellte Benutzerschnittstelle 28 in Form eines Touch-Screens realisiert sein, auf welchem die Grenzen 32 bis 36 des Feldes 38 und die Repräsentation 40 angezeigt werden. Es kann auch ein Bildschirm und eine von diesem getrennte Bedieneinrichtung, beispielsweise ein Steuerhebel, vorgesehen sein. Beispielsweise kann ein Bedienelement in der Mittelkonsole des Kraftwagens 10 und ein Bildschirm im Head-Up-Display und/oder im Kombiinstrument positioniert sein. Hierbei kann dann das Master-Fahrzeug (Repräsentation 40) und seine maßgebende Umgebung in vorteilhafter Weise in unterschiedlichen Abstrahierungsgraden visualisiert werden. Videorealistische Darstellungen sind ebenso denkbar wie stark abstrahierte, symbolische Darstellungsformen.

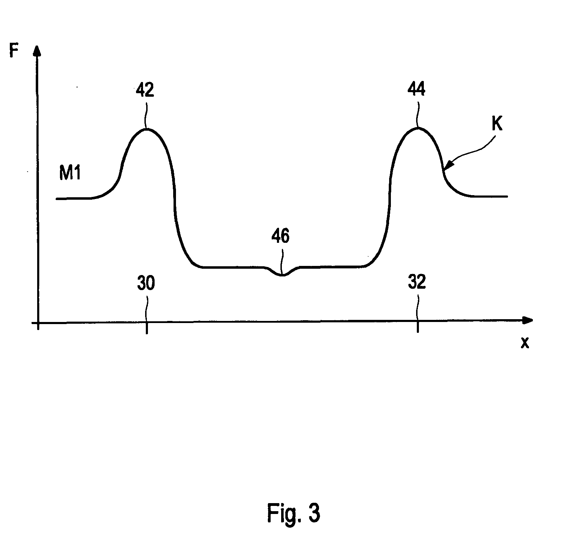

Zusätzlich oder alternativ zu einer visuellen Darstellung kann auch eine haptische Darstellung als Kommunikationsmedium dienen. Ein entsprechend ausgestaltetes Bedienelement kommuniziert dann die Grenzen 30 bis 36 als Kraft-Weg-Kennlinie mittels eines Aktors (z.B. eines Elektromotors) an beispielsweise eine Hand des Fahrers 12, welche das Bedienelement bedient. Eine solche Handhabe entspricht dann der Repräsentation 40 in Fig. 2. Ein geeignetes Bedienelement ist beispielsweise ein Steuerhebel mit entsprechenden Aktoren oder ein translatorisch verschiebbarer Körper auf der Mittelkonsole. In Fig. 3 ist ein beispielhafter Verlauf einer Kraft-Weg-Kennlinie K dargestellt, wie er zur haptischen Vermittlung der Ränder 30, 32 des Felds 38 an einer Handhabe erzeugt sein kann. Entlang einer x-Richtung senkrecht zur Fahrtrichtung auf der aktuellen Fahrspur ist durch ein Kraftmaximum 42 die durch den linken Fahrspurrand gegebene Grenze 30 und entsprechend durch ein Kraftmaximum 44 der rechte Fahrspurrand, d.h. die Grenze 32, repräsentiert. Lenkt der Fahrer 12 nun die Handhabe quer zur Fahrtrichtung, d.h. in x-Richtung, aus, so spürt er entsprechend dem in Fig. 3 betragsmäßig gezeigten Verlauf der Rückstellkraft F der Handhabe, dass bei Annäherung an die Grenze 30 bzw. 32 die Handhabe ihm eine immer größere Kraft entgegensetzt. Überwindet er dabei beispielsweise das Kraftmaximum 42, so löst er hierdurch das Fahrmanöver M1 aus. Eine Kraftsenke 46 zwischen der Grenze 30 und der Grenze 32 zeigt dem Fahrer 12 an, wo sich die Fahrspurmitte befindet (Querablage = 0). Ein zusätzliches haptisches Feedback ist über eine Kraftrückkopplung möglich, beispielsweise über die Vibration des Stellteils.

Die Benutzerschnittstelle kann einfacher ausgestaltet sein, wenn durch das Steuergerät 16 direkt die Eingabe des Fahrers 12 umgesetzt wird, sodass der Fahrer durch einen Blick aus dem Fahrzeug erkennt, wo der Kraftwagen 10 hingesteuert wird.

Weitere Ausführungen ermöglichen Kommunikation der Ränder des Feldes 38 durch die Benutzerschnittstelle 28 kann auf Grundlage von Bewegungen vermittelt werden, und hierbei dem Fahrer 12 eine Gestikbedienung oder eine Bedienung mittels Spracheingabe ermöglicht sein.

Durch die Beispiele ist gezeigt, wie durch die Integration des Master-Slave-Prinzips in ein Bedienkonzept für vollautomatisierte Fahrerassistenzfunktionen die Möglichkeit geboten ist, eine nutzerorientierte Interface-Gestaltung für zukünftige Fahrerassistenzsysteme zu realisieren. Einerseits wird die innere Modellbildung der aktuellen Fahrsituation und der Eigenschaften des Fahrerassistenzsystems für den Fahrer durch die Kommunikation über die Benutzerschnittstelle vereinfacht. Zusätzlich erhält der Fahrer mehr Informationen über das System Kraftwagen, von dem er eigentlich durch den vollautomatischen Betrieb entkoppelt wird. Im Falle einer Übernahmeanforderung durch das Fahrerassistenzsystem, wenn dieses beispielsweise eine Situation erkennt, in welcher eine automatisierte Führung unmöglich ist, ist eine höhere Güte der Übernahme der Fahrzeugführung durch den Fahrer zu erwarten, d.h. der Fahrer ist sich schneller darüber bewusst, wie er selbst das Fahrzeug manuell zu führen hat, um es wieder in einen sicheren Zustand zu manövrieren.

## Patentansprüche

1. Vorrichtung (14) zum automatisierten Führen eines Kraftwagens (10), welche dazu ausgelegt ist, während einer Fahrt des Kraftwagens (10) selbständig eine Quer- und Längsführung des Kraftwagens (10) durchzuführen, und welche hierzu eine Steuereinrichtung (16) zum Erzeugen von Steuersignalen für Aktoren (18, 20, 22, 24) des Kraftwagens (10) aufweist, wobei die Aktoren (18, 20, 22, 24) zum Führen des Kraftwagens (10) ausgelegt sind,
wobei durch die Steuereinrichtung (16) ein Slave einer Master-Slave-Anordnung und ein zugehöriger Master durch eine Benutzerschnittstelle (28) der Vorrichtung (14) gebildet ist,
indem die Benutzerschnittstelle (28) dazu ausgelegt ist, von einem Benutzer (12) eine Eingabe zu empfangen, welche eine Auswahl eines von dem Slave (16) auszuführenden Fahrmanövers (M1 bis M5) und/oder einen Fahrparameterwert für einen Fahrparameter (F1, F2) zu einem momentan von dem Slave (16) ausgeführten Fahrmanöver umfasst, und nachdem die Eingabe beendet ist in Abhängigkeit von der Eingabe den Slave (16) anzusteuern,
wobei die Benutzerschnittstelle (28) eine als Handhabe, Bild oder Symbol ausgestaltete Repräsentation (40) des Kraftwagens (10) umfasst, welche in einem Feld (38) angeordnet ist, bei welchem ein Rand (30 bis 36) eine höchstens zulässige Veränderung eines Fahrparameterwerts (F1, F2) oder des Fahrparameterwerts (F1, F2) repräsentiert,
**dadurch gekennzeichnet, dass**
die Benutzerschnittstelle (28) zum Erkennen zumindest einer der folgenden Bedienhandlungen eingerichtet ist. Einstellen des Fahrparameterwerts durch Verschieben der Repräsentation (40) des Kraftwagens (10) innerhalb des Feldes (38); Auswählen eines auszuführenden Fahrmanövers (M1 bis M5) durch Verschieben der Repräsentation (40) des Kraftwagens (10) über den Rand (30 bis 36) des Feldes (38) hinaus.

2. Vorrichtung (14) nach Anspruch 1, wobei zumindest eines der folgenden Fahrmanöver (M1 bis M5) auswählbar ist: ein Überholen (M2) eines vorausfahrenden Fahrzeugs, ein Abbiegen (M3), ein Einparken des Kraftwagens auf einen Parkplatz, ein Wechseln (M1) einer Fahrspur, ein Anfahren (M5) des Kraftwagens, eine Kick-Down-Beschleunigung (M5), ein Anhalten (M4) des Kraftwagens (10).

3. Vorrichtung (14) nach Anspruch 1 oder 2, wobei der Fahrparameterwert zu zumindest einem der folgenden Fahrparameter (F1, F2) vorgebbar ist: einen Abstand (F1) zu einem vorausfahrenden Fahrzeug, eine Querablage (F2) des Kraftwagens (10) innerhalb einer momentan befahrenen Fahrspur, eine Setzgeschwindigkeit einer Fahrgeschwindigkeitsregelung.

4. Vorrichtung (14) nach einem der vorhergehenden Ansprüche, wobei die Benutzerschnittstelle (28) dazu ausgelegt ist, die Repräsentation (40) des Kraftwagens (10) und den Rand (30 bis 36) des Feldes (38) graphisch auf einer Anzeige anzuzeigen.

5. Vorrichtung (14) nach einem der vorhergehenden Ansprüche, wobei bei der Benutzerschnittstelle (28) der Kraftwagen (10) durch eine Handhabe, insbesondere einen Steuerhebel, repräsentiert ist und die Benutzerschnittstelle (28) dazu ausgelegt ist, durch Ansteuern eines Aktors eine Kraft-Weg-Kennlinie (K) für eine Auslenkung (x) der Handhabe zu erzeugen und hierdurch den Rand (30 bis 36) des Feldes (38) dem Benutzer (12) haptisch zu vermitteln, während dieser die Handhabe auslenkt.

6. Vorrichtung (14) nach einem der vorhergehenden Ansprüche, wobei die Reaktion des Slaves (16) einer von einem Benutzer (12) bewirkten Positionsänderung der Repräsentation (40) des Kraftwagens (10) an dem Master (28) folgt.

7. Vorrichtung (14) nach Anspruch 6, wobei das Nachführen der durch den Slave (16) eingeregelten Position des Kraftwagens (10) beginnt, falls die Position der Repräsentation (40) des Kraftwagens (10) nach einer Latenzzeit immer noch durch den Benutzer (12) gehalten ist.

8. Vorrichtung (14) nach einem der vorhergehenden Ansprüche, wobei der Benutzer (12) die Eingabe an der Benutzerschnittstelle (28) zusätzlich bestätigen muss, bevor die Benutzerschnittstelle (28) den Slave (16) ansteuert.

9. Vorrichtung (14) nach einem der vorhergehenden Ansprüche, wobei die Benutzerschnittstelle (28) dazu ausgelegt ist, den Rand (30 bis 36) des Felds (38) in Abhängigkeit von einer Lage eines in einer Umgebung des Kraftwagens (10) durch eine Erkennungseinrichtung (26) der Vorrichtung (14) erkannten Objekts, insbesondere einer Spurmarkierung und/oder eines vorausfahrenden Fahrzeugs, und/oder in Abhängigkeit von einer Information zu einer Verkehrsregelung, insbesondere einer vorgeschriebenen Höchstgeschwindigkeit, festzulegen.

10. Vorrichtung (14) nach einem der vorhergehenden Ansprüche, wobei der Slave (16) in Abhängigkeit von Informationen zu in einer Umgebung des Kraftwagens (10) erkannten Objekten unabhängig vom Master (28) entscheidet, ob und wann er den Kraftwagen (10) gemäß vom Master (28) empfangenen Steuerdaten führt, insbesondere ob und wann er ein durch den Master (28) vorgegebenes Fahrmanöver (M1 bis M5) ausführt bzw. ob und wann er einen vom Master (28) empfangenen Fahrparameterwert einstellt.

11. Vorrichtung (14) nach einem der vorhergehenden Ansprüche, wobei die Benutzerschnittstelle (28) eine Gestensteuerung und/oder eine Sprachsteuerung umfasst.

12. Kraftwagen (10),
**gekennzeichnet durch**
eine Vorrichtung (14) gemäß einem der vorhergehenden Ansprüche.

13. Verfahren zum Betreiben eines Kraftwagens (10), umfassend die Schritte:
- an einer Benutzerschnittstelle (28) Darstellen einer Repräsentation (40) des Kraftwagens (10) sowie Darstellen von auswählbaren, möglichen Fahrmanövern (M1 bis M5) und/oder von möglichen Fahrparameterwerten zu Fahrparametern (F1, F2) für ein momentan ausgeführtes Fahrmanöver, wobei die Repräsentation (40) des Kraftwagens (10) in einem Feld (38) angeordnet ist, bei welchem ein Rand (30 bis 36) eine höchstens zulässige Veränderung eines Fahrparameterwerts (F1, F2) oder des Fahrparameterwerts (F1, F2) repräsentiert;
- Empfangen einer Eingabe eines Benutzers (12) an der Benutzerschnittstelle (28), durch welche durch den Benutzer (12) ein ohne sein Zutun auszuführendes Fahrmanöver (M1 bis M5) oder einen ohne sein Zutun einzuregelnden Fahrparameterwert (F1, F2) eines Fahrparameters angegeben ist;
- Erzeugen von Steuerdaten in Abhängigkeit von der Eingabe und Übertragen der Steuerdaten an eine Steuereinheit (16), welche den Kraftwagen (10) selbständig führt:
- Verändern einer Führung des Kraftwagens (10) durch die Steuereinheit (16) gemäß den Steuerdaten, falls ein vorbestimmtes Kriterium betreffend eine Umgebung des Kraftwagens (10) erfüllt ist, **gekennzeichnet durch**
Erkennen zumindest einer der folgenden Bedienhandlungen **durch** die Benutzerschnittstelle (28): Einstellen des Fahrparameterwerts **durch** Verschieben der Repräsentation (40) des Kraftwagens (10) innerhalb des Feldes (38); Auswählen eines auszuführenden Fahrmanövers (M1 bis M5) **durch** Verschieben der Repräsentation (40) des Kraftwagens (10) über den Rand (30 bis 36) des Feldes (38) hinaus.

## Claims

1. Device (14) for the automated guidance of a motor vehicle (10), which is configured so as to execute a transverse and longitudinal guidance of the motor vehicle (10) independently when the motor vehicle (10) is being driven, and which comprises for this purpose a control device (16) for generating control signals for actuators (18, 20, 22, 24) of the motor vehicle (10), the actuators (18, 20, 22, 24) being configured to guide the motor vehicle (10), wherein via the control device (16) a slave of a master-slave arrangement and a related master is formed through a user interface (28) of the device (14), in which the user interface (28) is configured to receive an input from a user (12), which includes selecting a driving manoeuvre (M1 to M5) to be executed by the slave (16) and/or a driving parameter value for a driving parameter (F1, F2) relating to a driving manoeuvre executed instantaneously by the slave (16), and after the input is complete to control the slave (16) depending on the input, wherein the user interface (28) includes a representation (40) of the motor vehicle (10) shown as a handle, image or symbol, which is arranged in a field (38) in which an edge (30 to 36) represents a maximum allowable alteration of a driving parameter value (F1, F2) or of the driving parameter value (F1, F2), **characterised in that** the user interface (28) is arranged to detect at least one of the following operating actions: adjustment of the driving parameter value by displacement of the representation (40) of the motor vehicle(10) within the field (38); selection of a driving manoeuvre (M1 to M5) to be executed by displacement of the representation (40) of the motor vehicle (10) beyond the edge (30 to 36) of the field (38).

2. Device (14) according to Claim 1, wherein at least one of the following driving manoeuvres (M1 to M5) can be selected: overtaking (M2) a vehicle in front, a turning manoeuvre (M3), a parking of the vehicle in a parking space, a change (M1) of lane, a starting (M5) of the motor vehicle, a kick-down acceleration (M5), a stopping (M4) of the motor vehicle (10).

3. Device (14) according to Claim 1 or 2, wherein the driving parameter value for at least one of the following driving parameters (F1, F2) can be predetermined: a distance (F1) to a vehicle in front, a sideways movement (F2) of the vehicle (10) moving instantaneously within a lane, setting a speed of a cruise control.

4. Device (14) according to any one of the preceding claims, wherein the user interface (28) is configured to display the representation (40) of the motor vehicle (10) and the edge (30 to 36) of the field (38) graphically on a display.

5. Device (14) according to any one of the preceding claims, wherein with the user interface (28) the motor vehicle (10) is represented by a handle, in particular a control lever, and the user interface (28) is configured so as to generate by control of an actuator a force-path characteristic (K) for a deflection (x) of the handle and thereby to convey haptically to the user (12) the edge (30 to 36) of the field (38) while the user deflects the handle.

6. Device (14) according to any one of the preceding claims, wherein the reaction of the slave (16) to a change of position of the representation (40) of the motor vehicle (10) carried out by a user (12) takes place at the master (28).

7. Device (14) according to Claim 6, wherein the tracking of the position of the motor vehicle (10) regulated by the slave (16) starts if the position of the representation (40) of the motor vehicle (10) after a latency period is still maintained by the user (12).

8. Device (14) according to any one of the preceding claims, wherein the user (12) in addition has to confirm the input at the user interface (28) before the user interface (28) actuates the slave (16).

9. Device (14) according to any one of the preceding claims, wherein the user interface (28) is configured so as to define the edge (30 to36) of the field (38) depending on a position of an object detected in an environment of the motor vehicle (10) by a detection unit (26) of the device (14), in particular a lane marking and/or a vehicle in front, and/or depending on information regarding a traffic regulation, in particular a prescribed maximum speed limit.

10. Device (14) according to any one of the preceding claims, wherein the slave (16) decides independently of the master (28) depending on information regarding an object detected in the environment of the motor vehicle (10), if and when it guides the motor vehicle (10) according to control data received by the master (28), in particular if and when it executes a driving manoeuvre (M1 to M5) predetermined by the master (28), and if and when it adjusts a driving parameter value received by the master (28).

11. Device (14) according to any one of the preceding claims, wherein the user interface (28) includes a gesture control and/or a speech control.

12. Motor vehicle (10) **characterised by** a device (14) according to any one of the preceding claims.

13. Method for operating a motor vehicle (10), comprising the steps:
- presenting at a user interface (28) a representation (40) of the motor vehicle (10) as well as presenting possible driving manoeuvres (M1 to M5) that can be selected and/or presenting possible driving parameter values for driving parameters (F1, F2) for an instantaneously executed driving manoeuvre, wherein the representation (40) of the motor vehicle (10) is arranged in a field (38) in which an edge (30 to 36) represents a maximum allowable change of a driving parameter value (F1, F2) or of the driving parameter value (F1, F2);
- receiving an input of a user (12) at the user interface (28), by means of which a driving manoeuvre (M1 to M5) to be executed without the user's intervention or a driving parameter value (F1, F2) of a driving parameter to be regulated without the user's intervention is specified by the user (12);
- generating control data depending on the input and transfer of the control data to a control unit (16) that independently drives the motor vehicle (10);
- alteration of a guidance of the motor vehicle (10) by the control unit (16) according to the control data if a predetermined criterion relating to the environment of the motor vehicle (10) is met, **characterised by** detection of at least one of the following operating actions via the user interface (28); adjustment of the driving parameter value by displacement of the representation (40) of the motor vehicle (10) within the field (38); selection of a driving manoeuvre (M1 to M5) to be executed by displacement of the representation (40) of the motor vehicle (10) beyond the edge (30 to 36) of the field (38).

## Revendications

1. Dispositif (14) servant à guider de manière automatisée un véhicule à moteur (10), lequel est configuré pour effectuer en toute autonomie un guidage transversal et un guidage longitudinal du véhicule à moteur (10) au cours d'une conduite du véhicule à moteur (10) et lequel présente à cet effet un système de commande (16) servant à produire des signaux de commande pour des actionneurs (18, 20, 22, 24) du véhicule à moteur (10), les actionneurs (18, 20, 22, 24) étant configurés pour guider le véhicule à moteur (10),
un esclave d'un ensemble maître-esclave étant formé par le système de commande (16) et un maître associé étant formé par une interface utilisateur (28) du dispositif (14),
en ce que l'interface utilisateur (28) est configurée pour recevoir d'un utilisateur (12) une entrée, qui comprend une sélection d'une manoeuvre de conduite (M1 à M5) à exécuter par l'esclave (16) et/ou une valeur de paramètre de conduite pour un paramètre de conduite (F1, F2) portant sur une manoeuvre de conduite exécutée de manière instantanée par l'esclave (16) et pour piloter, à l'issue de l'entrée, l'esclave (16) en fonction de l'entrée,
l'interface utilisateur (28) comprenant une représentation (40), configurée sous la forme d'une manette, d'une image ou d'un symbole, du véhicule à moteur (10), laquelle est disposée dans un champ (38), dans lequel un bord (30 à 36) représente une modification maximale admissible d'une valeur de paramètre de conduite (F1, F2) ou de la valeur de paramètre de conduite (F1, F2),
**caractérisé en ce**
**que** l'interface utilisateur (28) est mise au point pour identifier au moins une des manipulations suivantes : le réglage de la valeur de paramètre de conduite en glissant la représentation (40) du véhicule à moteur (10) au sein du champ (38) ; la sélection d'une manoeuvre de conduite (M1 à M5) à exécuter en glissant la représentation (40) du véhicule à moteur (10) au-delà du bord (30 à 36) du champ (38).

2. Dispositif (14) selon la revendication 1, au moins une des manoeuvres de conduite (M1 à M5) suivantes pouvant être sélectionnée : un dépassement (M2) d'un véhicule qui précède ; une bifurcation (M3) ; un stationnement du véhicule à moteur sur un emplacement de stationnement ; un changement (M1) de voie ; un démarrage (M5) du véhicule à moteur; une accélération de kick-down (M5) ; un arrêt (M4) du véhicule à moteur (10).

3. Dispositif (14) selon la revendication 1 ou 2, la valeur de paramètre de conduite portant sur au moins un des paramètres de conduite (F1, F2) suivants pouvant être prédéfinie : une distance (F1) par rapport à un véhicule qui précède ; un déport transversal (F2) du véhicule à moteur (10) dans une voie empruntée instantanément ; une vitesse établie d'une régulation de vitesse de conduite.

4. Dispositif (14) selon l'une quelconque des revendications précédentes, l'interface utilisateur (28) étant configurée pour afficher graphiquement sur un système d'affichage la représentation (40) du véhicule à moteur (10) et le bord (30 à 36) du champ (38).

5. Dispositif (14) selon l'une quelconque des revendications précédentes, le véhicule à moteur (10) étant représenté, dans l'interface utilisateur (28), par une manette, en particulier par un levier de commande, et l'interface utilisateur (28) étant configurée pour produire, par le pilotage d'un actionneur, une courbe caractéristique de force-déplacement (K) pour une déviation (x) de la manette et pour ainsi communiquer de manière haptique à l'utilisateur (12) le bord (30 à 36) du champ (38), tandis que l'utilisateur dévie la manette.

6. Dispositif (14) selon l'une quelconque des revendications précédentes, la réaction de l'esclave (16) suivant un changement de position, provoqué par un utilisateur (12), de la représentation (40) du véhicule à moteur (10) au niveau du maître (28).

7. Dispositif (14) selon la revendication 6, le suivi de la position, entrée par réglage par l'esclave (16), du véhicule à moteur (10) débutant si la position de la représentation (40) du véhicule à moteur (10) est encore maintenue par l'utilisateur (12) après un temps de latence.

8. Dispositif (14) selon l'une quelconque des revendications précédentes, l'utilisateur (12) devant activer en supplément l'entrée sur l'interface utilisateur (28) avant que l'interface utilisateur (28) ne pilote l'esclave (16).

9. Dispositif (14) selon l'une quelconque des revendications précédentes, l'interface utilisateur (28) étant configurée pour fixer le bord (30 à 36) du champ (38) en fonction d'un emplacement d'un objet identifié dans un environnement du véhicule à moteur (10) par un système d'identification (26) du dispositif (14), en particulier d'un marquage de voie et/ou d'un véhicule qui précède, et/ou en fonction d'une information portant sur un code de la route, en particulier une vitesse maximale prescrite.

10. Dispositif (14) selon l'une quelconque des revendications précédentes, l'esclave (16) décidant en fonction des informations portant sur des objets identifiés dans un environnement du véhicule à moteur (10), indépendamment du maître (28), si et quand il guide le véhicule à moteur (10) selon les données de commande reçues par le maître (28), en particulier si et quand il exécute une manoeuvre de conduite (M1 à M5) prédéfinie par le maître (28) ou si et quand il règle une valeur de paramètre de conduite reçue par le maître (28).

11. Dispositif (14) selon l'une quelconque des revendications précédentes, l'interface utilisateur (28) comprenant une commande gestuelle et/ou une commande vocale.

12. Véhicule à moteur (10),
**caractérisé par**
un dispositif (14) selon l'une quelconque des revendications précédentes.

13. Procédé servant à faire fonctionner un véhicule à moteur (10), comprenant les étapes suivantes :
- l'affichage sur une interface utilisateur (28) d'une représentation (40) du véhicule à moteur (10) ainsi que l'affichage de manoeuvres de conduite (M1 à M5) possibles pouvant être sélectionnée et/ou de possibles valeurs de paramètre de conduite portant sur des paramètres de conduite (F1, F2) pour une manoeuvre de conduite exécutée de manière instantanée, la représentation (40) du véhicule à moteur (10) étant disposée dans un champ (38), dans lequel un bord (30 à 36) représente une modification maximale admise d'une valeur de paramètre de conduite (F1, F2) ou de la valeur de paramètre de conduite (F1, F2) ;
- la réception d'une entrée d'un utilisateur (12) sur l'interface utilisateur (28), par laquelle une manoeuvre de conduite (M1 à M5) à exécuter sans son intervention ou une valeur de paramètre de conduite (F1, F2) à réguler sans son intervention, d'un paramètre de conduite est indiquée par l'utilisateur (12) ;
- la production de données de commande en fonction de l'entrée et le transfert des données de commande à une unité de commande (16), qui conduit en toute autonomie le véhicule à moteur (10) ;
- la modification d'un guidage du véhicule à moteur (10) par l'unité de commande (16) selon les données de commande, si un critère prédéterminé concernant un environnement du véhicule à moteur (10) est rempli,
**caractérisé par**
l'identification au moins d'une des manipulations suivantes par l'interface utilisateur (28) : le réglage de la valeur de paramètre de conduite en glissant la représentation (40) du véhicule à moteur (10) à l'intérieur du champ (38) ; la sélection d'une manoeuvre de conduite (M1 à M5) à exécuter en glissant la représentation (40) du véhicule à moteur (10) au-delà du bord (30à 36) du champ (38).
